# EUROPÄISCHE PATENTSCHRIFT

(11) **EP 0 790 905 B1**
(45) Veröffentlichungstag und Bekanntmachung des Hinweises auf die Patenterteilung: **10.02.1999**
(21) Anmeldenummer: 95919985.2
(22) Anmeldetag: 10.10.1995
(51) Int. Cl.: B60R 21/20

(54) **INNENVERKLEIDUNGSTEIL FÜR KRAFTFAHRZEUGE**
INTERIOR TRIM COMPONENT FOR MOTOR VEHICLES
ELEMENT D'HABILLAGE INTERIEUR POUR VEHICULES A MOTEUR

(30) Priorität: 09.11.1994 DE 4440024
(43) Veröffentlichungstag der Anmeldung: 27.08.1997
(73) Patentinhaber: Johnson Controls Interiors GmbH, 42285 Wuppertal (DE)
(72) Erfinder: BERGERS, Helmut, D-47929 Grefrath (DE); LAMERS, Bernd, D-47906 Kempen (DE)
(74) Vertreter: Werner, Dietrich H., Dr.-Ing.
(86) Internationale Anmeldenummer: EP9503987
(87) Internationale Veröffentlichungsnummer: WO9615011

(56) Entgegenhaltungen:
- WO-A-92/17351
- DE-A- 4 137 926
- FR-A- 2 703 011
- GB-A- 2 263 667
- US-A- 5 062 661
- US-A- 5 447 327

## Beschreibung

Die Erfindung betrifft ein Innenverkleidungsteil, insbesondere eine Instrumententafel, für Kraftfahrzeuge, das aus einem folienkaschierten oder beschäumten Träger besteht, der eine Ausnehmung für den Durchtritt eines Airbags bei dessen Auslösung im Gefahrenfall aufweist, die durch eine Klappe ausgefüllt ist, die auf einem Teil ihres Umfangs über einen Verbindungssteg mit dem Träger einstückig verbunden ist, wobei der Verbindungssteg durch einen an der Unterseite des Trägers entlang des Verbindungsstegs befestigten Streifen verstärkt ist.

Ein derartiges Innenverkleidungsteil ist aus der DE 44 18 172 bekannt. Entlang des zwischen dem Träger und der Airbagklappe vorhandenen Verbindungssteges ist dabei ein Verstärkungsstreifen aus einem flexiblen, reißfesten Material aufgeklebt, der die Gefahr beseitigen soll, daß beim explosionsartigen Auslösen des Airbags die Airbagklappe abreißt und zu Verletzungen der Personen im Fahrzeug führt. Das Aufkleben eines Verstärkungsstreifens kann jedoch nicht unbedingt als sichere Maßnahme angesehen werden, da bei solchen Klebeverbindungen, wie die Praxis gezeigt hat, die Gefahr der Weichmacherwanderung besteht. Es besteht somit die Gefahr, daß sich der Verstärkungsstreifen mit der Zeit von der Instrumententafel löst, was wegen der rückseitigen Anordnung nicht einmal bemerkt werden kann. Darüber hinaus bedeutet das Aufkleben einen zusätzlichen Arbeitsgang, den Einsatz von Zusatzmaterial (Kleber) und unter Umständen die Notwendigkeit eines Entlüftens.

Aus der GB-A-2 263 667 ist eine Airbagklappe bekannt, bei der es sich um ein separates Bauteil handelt, welches nachträglich montiert werden muß. Diese separate Airbagklappe trägt ein Metallelement, das mit Öffnungen versehen ist, durch welche sich Material der Airbagklappe hindurch erstreckt, um das Metallelement an dieser festzulegen. Dieses Metallelement ist jedoch kein Verstärkungsstreifen, sondern ein Scharnierelement, das mit einer geeigneten Scharnierkonstruktion zu verbinden ist.

Desweiteren ist es aus der FR-A-2 703 011 bekannt, ein mit Öffnungen versehenes Scharnier in den Träger einer Instrumententafel bzw. eine Airbagklappe einzugießen, wobei das Träger- bzw. Klappenmaterial die Öffnungen durchdringt. Auch diese Druckschrift offenbart aber keinen Verstärkungsstreifen im Sinne der vorliegenden Erfindung.

Vor dem Hintergrund dieses Standes der Technik lag der Erfindung die Aufgabe zugrunde, ein Innenverkleidungsteil der eingangs genannten Art hinsichtlich des Materials und der Ausbildung des Verstärkungsstreifens sowie insbesondere hinsichtlich seiner unbedingt zuverlässigen Befestigungsanordnung zu verbessern. Desweiteren soll die Befestigung des Verstärkungsstreifens kostengünstig und ohne zusätzlichen Arbeitsgang erfolgen können.

Diese Aufgabe wird erfindungsgemäß dadurch gelöst, daß der Streifen ein Nietöffnungen aufweisender Blechstreifen ist, der auf dem Träger aufgepreßt und durch beim Aufpressen in die Nietöffnungen fließendes Trägermaterial nach dessen Aushärten festliegend am Träger gehalten ist.

In der Zeichnung ist ein Ausführungsbeispiel der Erfindung dargestellt.

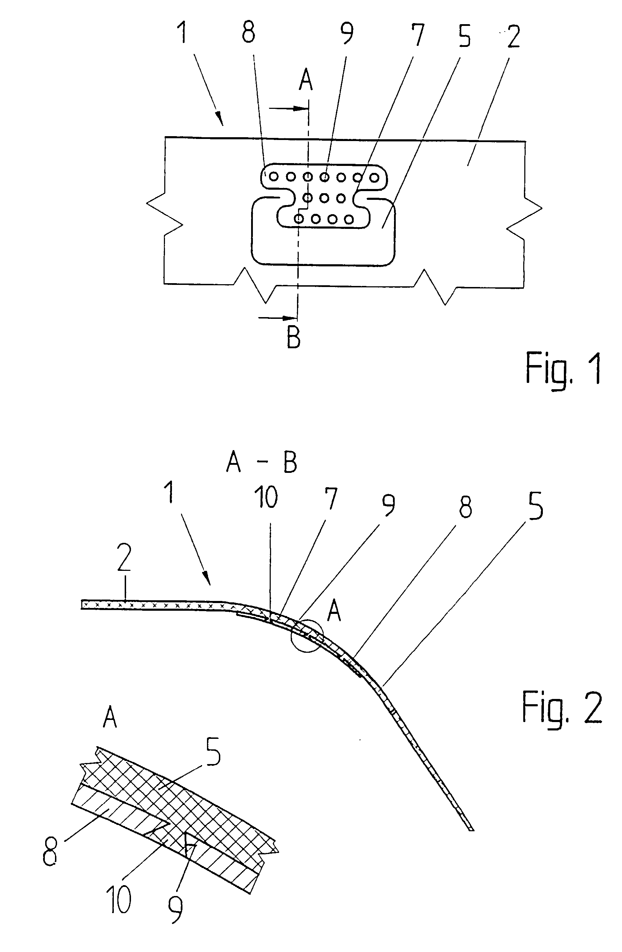

- Fig. 1: zeigt eine Instrumententafel eines Kraftfahrzeuges mit Airbagklappe in Draufsicht und
- Fig. 2: im Teilquerschnitt.

Die Instrumententafel 1 besteht wie üblich aus einem Träger 2, der mit einer Folie beschichtet ist. Auf der Beifahrerseite ist eine mit dem Träger 2 auf einem Teil ihres Umfanges integrale Klappe 5 angeordnet. Entlang des Verbindungssteges 7 zwischen der Klappe 5 und dem Träger 2 ist ein Blechstreifen 8 zur Verstärkung von unten aufgenietet. Beim Aufpressen des Blechstreifens 8 auf den Verbindungssteg 7 fließt Trägermaterial 10 durch Nietöffnungen 9 im Blechstreifen 8 und bildet nach dem Aushärten eine einer Nietverbindung vergleichbare Verbindung. Dadurch kann auf Fremdnieten verzichtet werden, deren Köpfe sichtbar werden und den Gesamteindruck stören würden. Fremdnieten könnten auch die Kaschierung verletzen. Das Anbringen des Blechverstärkungsstreifens kann kostengünstig während der Herstellung des mit der Klappe integralen Trägers, also ohne zusätzlichen Arbeitsgang, erfolgen.

## Patentansprüche

1. Innenverkleidungsteil, insbesondere Instrumententafel (1), für Kraftfahrzeuge, das aus einem folienkaschierten oder beschäumten Träger (2) besteht, der eine Ausnehmung für den Durchtritt eines Airbags bei dessen Auslösung im Gefahrenfall aufweist, die durch eine Klappe (5) ausgefüllt ist, die auf einem Teil ihres Umfangs über einen Verbindungssteg (7) mit dem Träger (2) einstückig verbunden ist, wobei der Verbindungssteg (7) durch einen an der Unterseite des Trägers entlang des Verbindungsstegs (7) befestigten Streifen verstärkt ist, dadurch gekennzeichnet, daß der Streifen ein Nietöffnungen (9) aufweisender Blechstreifen (8) ist, der auf Verbindungssteg (7) aufgepreßt und durch beim Aufpressen in die Nietöffnungen (9) fließendes Trägermaterial (10) nach dessen Aushärten festliegend am Träger (2) gehalten ist.

2. Innenverkleidungsteil nach Anspruch 1, dadurch gekennzeichnet, daß die Nietöffnungen (9) im Blechstreifen (8) so angeordnet sind, daß sie sich beim Aufpressen des Blechstreifens (8) auf den Verbindungssteg (7) in gleichmäßiger Anordnung sowohl entlang des Verbindungsstegs (7) als auch beidseitig davon erstrecken.

3. Innenverkleidungsteil nach Anspruch 1 oder 2, dadurch gekennzeichnet, daß der Öffnungsquerschnitt der Nietöffnungen (9) an der am Träger (2) anliegenden Seite des Blechstreifens (8) kleiner ist als an der dem Träger (2) abgewandten Seite des Blechstreifens (8).

## Claims

1. A interior panel part, especially an instrument panel (1), for motor vehicles, consisting of a film-laminated or foamed backing (2) having a recess for an airbag to come through when the latter is deployed in case of danger, said recess being filled by a flap (5) which is on part of its periphery attached in one piece to the backing (2) by a connecting web (7), with the connecting web (7) being reinforced by a strip attached to the underside of the backing along the connecting web (7), characterized in that the strip is a sheet metal strip (8) which has rivet openings (9) and is pressed on the connecting web (7), and after the backing material hardens, the strip is held tigthly on the backing (2) by backing material (10) which flows into the rivet openings (9) when pressed.

2. A interior panel part according to Claim 1, characterized in that the rivet openings (9) are arranged in the sheet metal strip (8) in such a way that they extend along the connecting web (7) and also on both sides of it in a uniform arrangement when the sheet metal strip (8) is pressed onto the connecting web (7).

3. A interior panel part according to Claim 1 or 2, characterized in that the cross section of the rivet openings (9) is smaller on the side of the sheet metal strip (8) which is in contact with the backing (2) than on the side of the sheet metal strip (8) facing away from the backing (2).

## Revendications

1. Pièce de garnissage intérieure, en particulier planche de bord (1), pour véhicules automobiles, qui se compose d'un support (2) en feuille doublée ou moussé présentant une découpure pour le passage d'un airbag si celui-ci se déclenche en cas de danger, laquelle est remplie par une trappe (5) qui, sur une partie de son pourtour, est raccordée d'un seul tenant au support, par l'intermédiaire d'une nervure de liaison (7), la nervure de liaison (7) étant renforcée par une bande fixée à la face inférieure du support, le long de la nervure de liaison (7), caractérisée en ce que la bande est une bande de tôle (8) qui présente des trous à rivets (9) et qui est pressée contre la nervure de liaison (7), bande que du matériau (10) du support qui coule dans les trous à rivets (9) lors de cette pression retient solidaire du support (2), une fois durci.

2. Pièce de garnissage intérieure selon la revendication 1, caractérisée en ce que les trous à rivets (9) ménagés dans la bande de tôle (8) sont disposés de telle manière que lorsque la bande de tôle (8) est pressée sur la nervure de liaison (7), ils se répartissent avec un groupement régulier, aussi bien le long de la nervure de liaison (7) que de chaque côté de cette dernière.

3. Pièce de garnissage intérieure selon la revendication 1 ou 2, caractérisée en ce que la section transversale d'ouverture des trous à rivets (9) est plus petite sur la face de la bande de tôle (8) adjacente au support (2), que sur la face de la bande de tôle (2) orientée à l'opposé du support (2).
